(19) Europäisches Patentamt
European Patent Office
Office européen des brevets

(11) **EP 4 618 455 A1**

(12) **EUROPEAN PATENT APPLICATION**

(43) Date of publication:
**17.09.2025 Bulletin 2025/38**

(21) Application number: **24305382.4**

(22) Date of filing: **14.03.2024**

(51) International Patent Classification (IPC):
**H04L 1/00** (2006.01)     **H04B 17/373** (2015.01)

(52) Cooperative Patent Classification (CPC):
**H04L 1/0003; H04B 17/373; H04L 1/0009; H04L 1/0015**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Mitsubishi Electric R&D Centre Europe B.V.**
**1119 NS  Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **CORLAY, Vincent**
**35708 RENNES CEDEX 7 (FR)**
• **SIBEL, Jean-Christophe**
**35708 RENNES CEDEX 7 (FR)**
• **GRESSET, Nicolas**
**35708 RENNES CÉDEX 7 (FR)**

(74) Representative: **Plasseraud IP**
**104 Rue de Richelieu**
**CS92104**
**75080 Paris Cedex 02 (FR)**

(54) **INTERFERENCE-AWARE LINK ADAPTATION**

(57)     The invention relates to a method for implementing a dynamic link for transmitting data over a communication channel, the method comprising:
- obtaining a prediction of an interference on the communication channel, where the prediction is associated with a communication resource of the communication channel, the communication resource being a time resource, a frequency resource or a space resource;
- obtaining a coherence characteristic of the interference on the communication channel; and
- determining a communication parameter for use in the dynamic link for the communication resource, the determination being based on the prediction of the interference and/or on the coherence characteristic.

FIG. 2

**Description**

**Technical Field**

This disclosure pertains to the field of telecommunications.

The disclosure more particularly relates to a method for implementing a dynamic link for transmitting data over a communication channel, to a corresponding receiver, a corresponding non-transitory computer readable medium, to a corresponding program and to a corresponding system.

**Background Art**

The field of dynamic sensing, spectrum access, and link adaptation in communication systems has been extensively explored in contemporary research and development. This area of technology is primarily concerned with optimizing the use of communication resources through the prediction of their availability. These concepts are central to both standard interference management strategies and the framework of cognitive radio technologies. In the context of cognitive radio, a secondary user's goal is to avoid interference with a primary user of a communication medium. While the applications in these two domains differ, their underlying technical methodologies share similarities.

The typical process in these systems involves several key steps:

- Sensing the state of the communication channel,
- Predicting interference or the behavior of primary users, particularly in cognitive radio scenarios,
- Implementing strategies for spectrum access and link adaptation.

Previous works have addressed challenges in interference prediction and the balance between sensing and communication activities. These works have particularly focused on the reliability of interference prediction models, which may vary based on factors like the number of sensing observations conducted.

Aside from these previous works, significant limitation in other current approaches is the assumption that the parameters of prediction models are perfectly known and precise. This assumption extends to most studies focusing on link adaptation, where the interference state, and consequently the signal-to-noise ratio (SNR), is often presumed to remain constant throughout the transmission of a codeword.

However, this assumption does not account for scenarios where the available observations for characterizing prediction model parameters are limited. The finite nature of these observations introduces a degree of uncertainty or unreliability in the models used. Furthermore, there is a lack of consideration for situations where a codeword might encounter multiple interference states, leading to varying SNR levels during its transmission.

In light of these challenges, there is a need for an improved approach in dynamic communication systems, one that effectively manages the unpredictability and variability inherent in interference patterns and resource availability, while optimizing link adaptation strategies under these conditions.

**Summary**

This disclosure improves the situation.

It is proposed a method for implementing a dynamic link for transmitting data over a communication channel, the method comprising:

- obtaining a prediction of an interference on the communication channel, where the prediction is associated with a communication resource of the communication channel, the communication resource being a time resource, a frequency resource or a space resource;
- obtaining a coherence characteristic of the interference on the communication channel; and
- determining a communication parameter for use in the dynamic link for the communication resource, the determination being based on the prediction of the interference and/or on the coherence characteristic.

It is further proposed a computer program comprising instructions which, when the program is executed by a processing unit, cause the processing unit to carry out the above method.

It is further proposed a non-transitory computer-readable recording medium on which a program is recorded for implementing the above method when the program is executed by a processor.

It is further proposed a system being configured to implement a dynamic link for transmitting data over a communication channel, the system being configured to:

- obtain a prediction of an interference on the communication channel, where the prediction is associated with a communication resource of the communication channel, the communication resource being a time resource, a frequency resource or a space resource;
- obtain a coherence characteristic of the interference on the communication channel; and
- determine a communication parameter for use in the dynamic link for the communication resource, the determination being based on the prediction of the interference and/or on the coherence characteristic.

The coherence characteristic is related to a behavior of the interference on the communication channel. It may for instance be related to a temporal behavior of the interference on the communication channel when the communication resource is a time resource, to a frequency behavior of the interference on the communication channel when the communication resource is a frequency resource, and/or to a spatial behavior of the interference on the communication channel when the communication resource is a space resource.

The proposed technique enhances the adaptability and efficiency of communication systems in dynamic environments. The intelligent determination of a modulation and coding scheme (MCS) based on prediction capabilities for a specific communication resource and tailored for the specific communication resource substantially improves the management of predictable and unpredictable interference patterns and the utilization of communication resources, thereby optimizing link adaptation strategies.

In an example, the prediction of the interference comprises a prediction of an activation probability of the interference. More generally, the prediction of the interference may comprise one or more of a prediction of an activation probability, of an intensity, of a type, of a duration, of a frequency range, of a source location, of a pattern, or of an impact of the interference.

In an example, the prediction of the interference is obtained from an interference prediction model comprising estimated parameters. In an example, the coherence characteristic is computed based on the estimated parameters of the interference prediction model. Said estimated parameters may for instance comprise a transition probability representing a likelihood of change in an interference state on the communication channel between the communication resource and a neighboring communication resource.

A neighboring communication resource may be a neighboring time, frequency and/or space resource.

This approach leads to more reliable and efficient link adaptation, reducing the likelihood of communication failures due to interference.

In an example, the prediction of the interference and the coherence characteristic are deterministic. A deterministic prediction of the interference may be obtained in the form of one or more specific values fully defining one or more aspects of the interference. A deterministic coherence characteristic may be obtained in the form of one or more specific values fully defining one or more aspects of the coherence characteristic.

In an example, the prediction of the interference and the coherence characteristic are probabilistic, the prediction of the interference includes a reliability information that quantifies a certainty of the prediction of the interference and the coherence characteristic includes a distinct reliability information that quantifies a certainty of the coherence characteristic. The reliability information may be obtained by various means, for instance the reliability information may be computed, estimated or measured.

Probabilistic predictions/coherence characteristics provide informed decision-making in the face of uncertainty, which allows for risk assessment and management in real-time communication scenarios, in the case of interference prediction model uncertainty. Model prediction uncertainty can be influenced by the number of observations available. For instance, in machine learning, the ability of a model to make accurate predictions is largely dependent on the diversity and volume of the training data. In a dynamic environment, where conditions and behaviors change frequently, a small number of observations may not be representative of the overall range of possible behaviors of the interferer.

On the other hand, deterministic predictions/coherence characteristics streamline the modulation and coding scheme determination process by reducing computational demands. With clearly defined coherence characteristics and activation probabilities, the system can quickly and efficiently converge on an optimal modulation and coding scheme.

In an example, the at least one communication parameter is representative of one or more among a modulation and coding scheme, a coding rate and a codeword segmentation scheme. For instance, the at least one communication parameter may allow selecting a codeword segmentation scheme from a range of possible options. Alternatively, the at least one communication parameter may allow selecting a specific modulation and coding scheme from a set of available options each associated to a fixed coding rate. Alternatively, the at least one communication parameter may allow selecting a specific coding rate for a given modulation and coding scheme supporting variable coding rates. Additionally, there is an option to use the at least one communication parameter to select a combination of a modulation and coding scheme with a specific coding rate and a codeword segmentation scheme. In other words, the at least one communication parameter may allow for an independent adjustment of the modulation and coding scheme, the coding rate or the codeword segmentation scheme or for a combined adjustment of two or even all three of these aspects.

In an example where the at least one communication parameter is representative of a modulation and coding scheme, determining the at least one communication parameters further based on a number of independent communication channel realizations, determined as a function of the coherence characteristic. The number of independent communication channel realizations may specifically correspond to the number of independent communication channel realizations experienced by a codeword, determined by considering a duration of the codeword to be compared with the coherence characteristic. In an example, the result of dividing the duration of the codeword by the coherence characteristic may be rounded to the nearest greater integer to obtain the number of independent channel realizations experienced by the codeword.

This approach allows fine-tuning the link adaptation process to the temporal dynamics of the interference, potentially increasing the effective data rate and overall system performance.

In an example, at least when the interferer power is fixed, the modulation and coding scheme that is selected for the case when the number of independent communication channel realizations equals 1 is selected with a lower coding rate than the modulation and coding scheme that is selected for the case when the number of independent communication channel realizations is greater than 1.

In this example, when only one realization is present, a lower coding rate is chosen, which offers the technical advantage of increased robustness and reliability under high-interference conditions. Conversely, with multiple realizations, it can be safely opted for a higher coding rate, thereby enhancing throughput.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general-purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes presented herein are not inherently related to any particular computer or other apparatus. Various general-purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

**Brief Description of Drawings**

Other features, details and advantages will be shown in the following detailed description and on the figures, on which:

**Fig. 1**

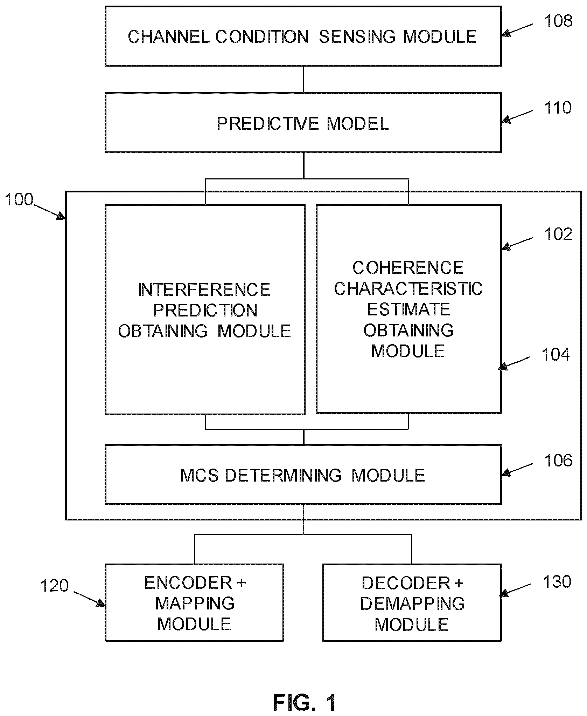

[Fig. 1] illustrates an example of system configured to implement a dynamic link for transmitting data over a communication channel.

**Fig. 2**

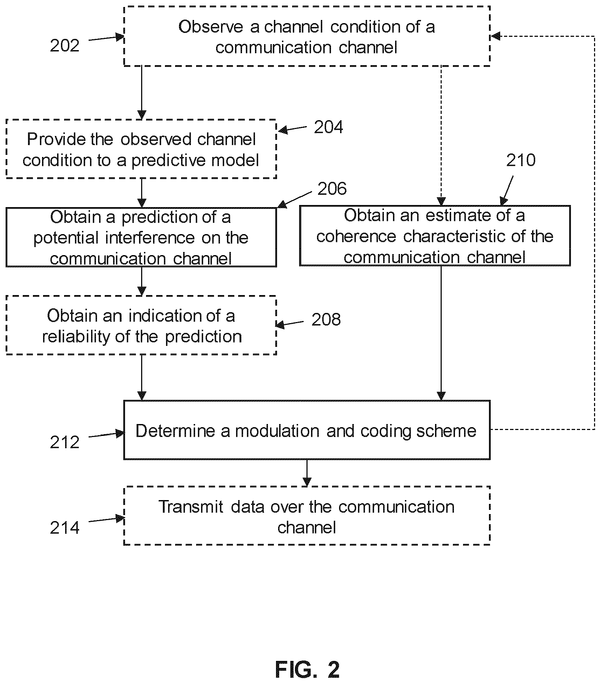

[Fig. 2] illustrates an example of method configured to implement a dynamic link for transmitting data over a communication channel.

**Fig. 3**

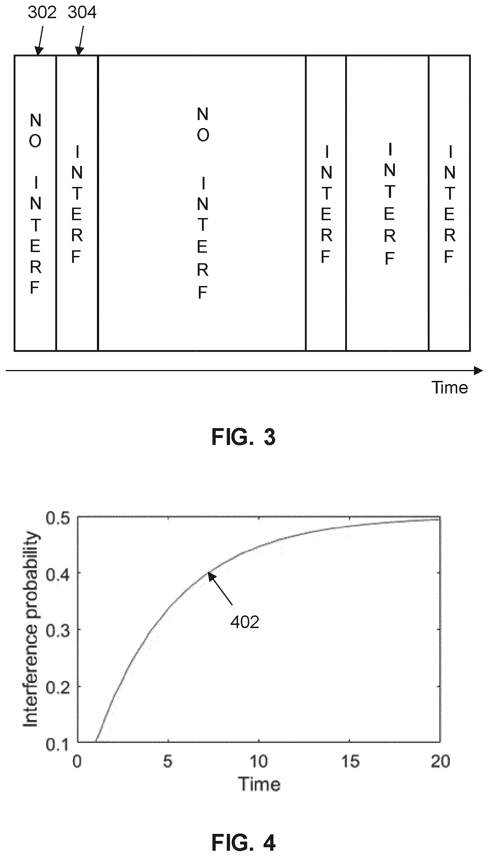

[Fig. 3] illustrates an example of sequence of a plurality of communication resources in a time domain.

**Fig. 4**
[Fig. 4] illustrates an example of evolution of an interference probability determined by using an example of predictive model where sensing is performed only at t=0.

**Fig. 5**

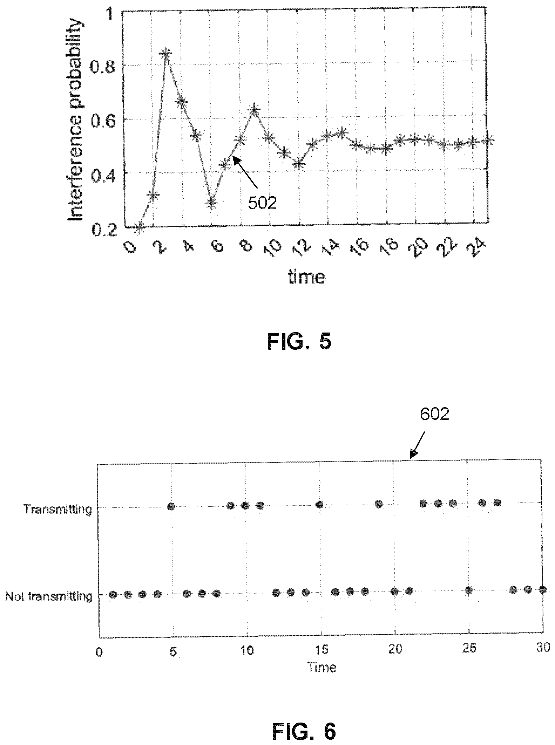

[Fig. 5] illustrates another example of evolution of an interference probability determined by using another example of predictive model where sensing is performed only at t=0.

**Fig. 6**

[Fig. 6] illustrates an example of sequence of operational states to be predicted for a communication device in relation to a sequence of transmission opportunities.

**Fig. 7**

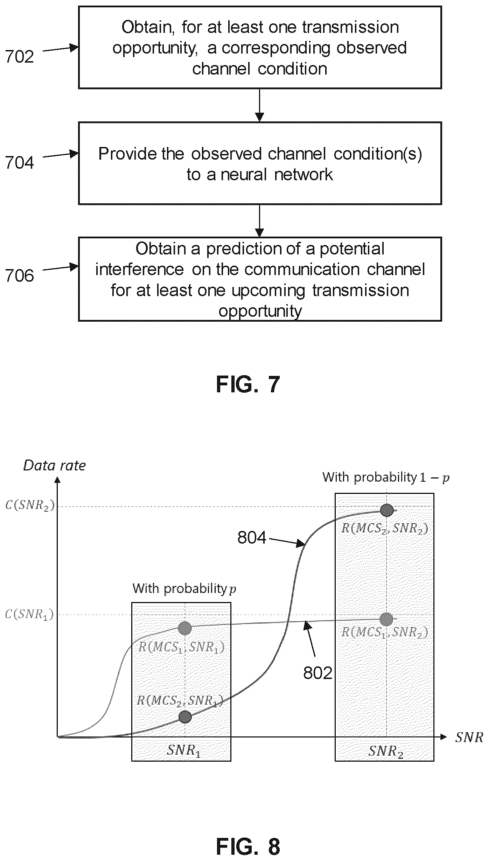

[Fig. 7] illustrates an example of use of a neural network to predict potential interference on a communication channel.

**Fig. 8**

[Fig. 8] illustrates an example of visual comparison of data rate performance for two modulation and coding schemes across different signal to noise and interference ratio (SNR) values.

**Fig. 9**

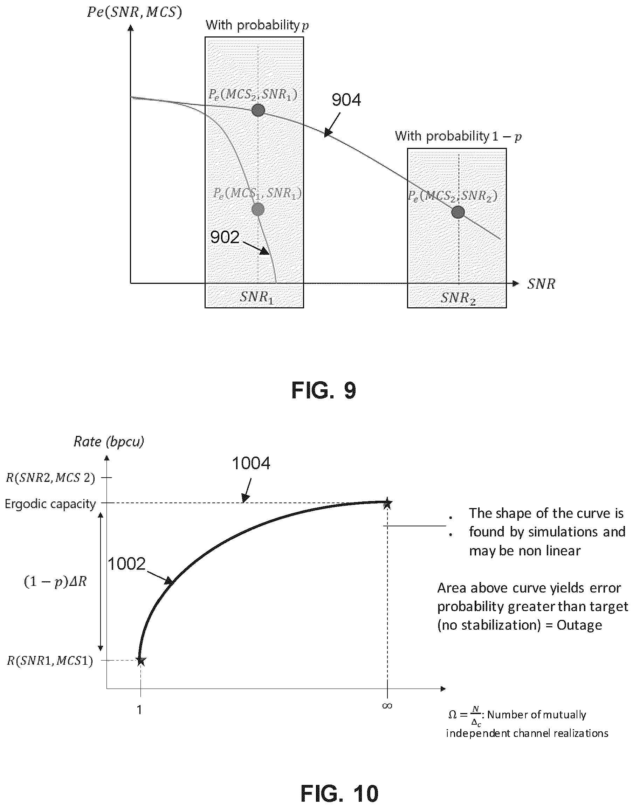

[Fig. 9] illustrates an example of visual comparison of error rate performance for two modulation and coding schemes across different signal to noise and interference ratio (SNR) values.

**Fig. 10**

[Fig. 10] illustrates an example of relationship between an achievable coding rate and a number $\Omega = N/\Delta_c$ of independent channel realizations for transmission of a codeword.

**Fig. 11**

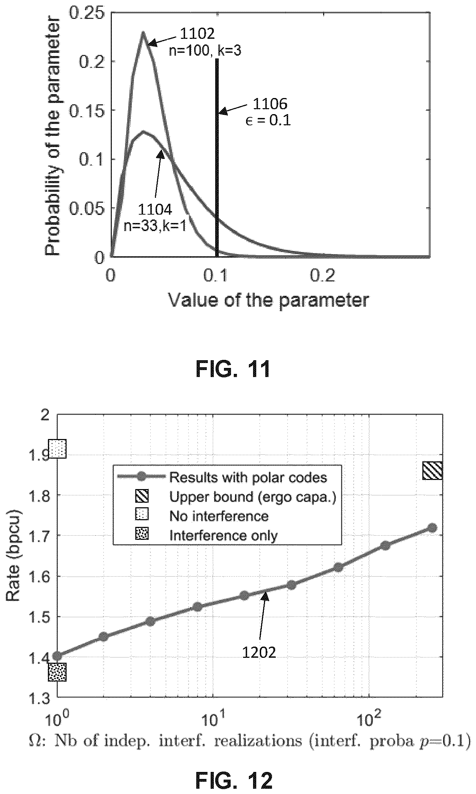

[Fig. 11] illustrates an example of distribution of a random variable $P$ representing a parameter $p$ for two sets of values $(n, k)$ where $n$ is a number of time slots for which a sensing operation is conducted and $k$ is a number of interference states observed by this sensing.

**Fig. 12**

[Fig. 12] illustrates performance results obtained with an example of multi-level coding scheme using polar codes to code each level.

## Description of Embodiments

The present disclosure is focused on a proposed technique which encompasses methods, systems and devices adapted to implement dynamic, or adaptive, links for transmitting data over one or more communication channels. Communication channels use communication resources which may be represented for instance as slots in a time domain and/or in a frequency domain and/or in a space domain.

The proposed technique may be implemented in various types of communication systems, including point-to-point systems or point-to-multipoint systems.

Fig. 1 provides an overview of a communication manager 100, in the sense of an aggregation of operably connected functional elements of a communication system that is suitable to provide an example of implementation of a dynamic link for transmitting data over a communication channel according to the proposed technique.

The communication manager 100 comprises:

an interference prediction obtaining module 102 configured to obtain an interference prediction, for instance from a predictive model 110, which itself may be configured to output the interference prediction based on an input channel condition obtained from a channel condition sensing module 108.

a coherence characteristic estimate obtaining module 104 configured to obtain an estimate of a coherence characteristic, for instance from the predictive model 110, and

a modulation and coding scheme determining module 106 configured to determine a modulation and coding scheme for use in implementing a dynamic link, for instance by an encoder and mapping module 120 and/or by a decoder and demapping module.

The coherence characteristic estimate obtaining module 104 may be replaced by a coherence characteristic obtaining module configured to obtain an exact value of the coherence characteristic by any appropriate technique known per se, in which cases all occurrences of the obtained "estimate" of the coherence characteristic in the text that follows shall be simply replaced by the obtained "exact value" of the coherence characteristic.

Fig. 2 provides an example of algorithm that is suitable to be used by the elements represented in Fig. 1 to provide an example of implementation of a dynamic link for transmitting data over a communication channel according to the proposed technique.

The algorithm may comprise observing 202 a channel condition of the communication channel using the channel condition sensing module 108. The channel condition is associated with a communication resource useable by the communication channel. In other words, the prediction is associated with a slot in the time domain, in the frequency domain and/or in the space domain. The channel condition is descriptive of whether or not an interferer is active for the associated communication resource.

The algorithm may comprise providing 204 the observed channel condition to the predictive model 110. The predictive model is configured to determine a prediction of an activation probability of an interference on the communication channel based on the provided observed channel condition. The predictive model may be further configured to utilize the observed channel condition as training data, which in turn contributes to increasing the reliability of further predictions.

The algorithm comprises obtaining 206, at the interference prediction obtaining module 102, a prediction of an activation probability of an interference on the communication channel. The prediction is associated with a communication resource useable by the communication channel. In other words, the prediction is associated with a slot in the time domain, in the frequency domain and/or in the space domain. The prediction may be provided by the predictive model 110.

The algorithm may comprise obtaining 208 an indication of the reliability of the prediction of the activation probability of the interference on the communication channel. The indication may be provided, along with or as part of the prediction, by the predictive model 110.

The algorithm comprises, in parallel of 204-208, obtaining 210, at the coherence characteristic estimate obtaining module 104, an estimate of a characteristic of the interference coherence on the communication channel. The characteristic of the interference coherence may be related to a temporal behavior, such as a duration, of the interference on the communication channel when the communication resource is defined as a time resource. The characteristic of the interference coherence may be related to a frequency behavior of the interference on the communication channel when the communication resource is defined as a frequency resource. The characteristic of the interference coherence may be related to a spatial behavior of the interference on the communication channel when the communication resource is defined as a space resource.

The algorithm further comprises determining 212 a modulation and coding scheme having a fixed coding rate for use in the dynamic link for the communication resource. The determination is based on the obtained prediction of the activation probability of the interference on the communication channel and on the obtained prediction of the interference coherence characteristic on the communication channel.

The algorithm may further comprise transmitting 214 data over the communication channel using a dynamic or adaptive link utilizing the determined modulation and coding scheme for the communication resource.

In an example, the observation obtained at 202 is provided 204 to the predictive model solely for obtaining 206 the interference prediction and optionally obtaining 208 the indication of reliability. This observation is however not used to update the predictive model.

In contrast, in another example, the observation obtained at 202 is provided 204 to the predictive model not only for obtaining 206 the interference prediction and optionally obtaining 208 the indication of reliability, but also to update the predictive model. Therefore, obtaining 210 the estimate of the coherence characteristic is repeated with each new observation.

In addition to or instead of adaptating the MCS as represented on Fig. 2, the transmitter can also implement the following dynamic link feature.

The transmitter can split the codeword/packet (called segmentation) in several subpackets. Then, the subpackets are sent at a given distance from each other in the considered domain.

The subpacket size and subpacket distance are established based on the estimate of the coherence characteristics and its potential reliability information, as well as a potential communication target (such as the rate).

Indeed, if e.g., the coherence characteristic time of the interferer is larger than the codeword size, the number of channel realizations is only 1 which does not enable to have a large rate. As a result, if the latency is not a constraint, one can transmit a sub packet, then wait for the estimated interference coherence time, transmit the second sub packet etc. This enables the codeword to experience several realizations and thus increase the achievable rate (involving the choice of an adequate MCS).

For instance, if a packet of size 256 is split in 32 subpackets, transmitted at a distance greater than the interference coherence time, then the number of mutually independent channel realizations $\Omega = 32$ and the associated rate can be increased.

Of course, subpackets related to other codewords can be transmitted in the holes between the subpackets related to one codeword.

Therefore, the communication parameter may be representative of a modulation and coding scheme having a fixed coding rate, as represented on Fig. 2 and/or the communication parameter may be representative of a codeword segmentation scheme.

For the sake of simplicity, in the examples detailed in the present document, the communication resources of the communication channel are depicted as time slots.

Although the proposed technique is described as involving a determination of a modulation and coding scheme for a communication resource based on predictions related to said communication resource, the technique may also involve a determination of a modulation and coding scheme for a plurality of communication resources based on predictions related to said plurality of communication resources.

In alignment with the methodology outlined in Fig. 2, a predictive model may be employed to obtain the prediction of an activation probability of an interference on the communication channel.

The predictive model may be facilitated by a probabilistic module which is configured to output a prediction result. The prediction result may include a variable indicating a probability that an interference will be active. For instance, the variable may be a Boolean variable which is TRUE if the interference is predicted to be active with very high probability and FALSE otherwise, corresponding respectively to an activation probability 1 and 0. The probabilistic module may use a dedicated algorithm and/or artificial intelligence means.

Possible interference models that may be used according to examples of the proposed technique are now described in relation to Fig. 3.

Fig. 3 provides an example of a time sequence comprising n "observed communication resources". An observed communication resource is a communication resource useable by a communication channel and for which an observation has been performed, the observation indicating whether or not an activity of an interferer is detected or estimated over said communication resource.

In this example, the n observed communication resources comprise:

- k observed communication resources where the interferer is active; and conversely, n-k observed communication resources where the interferer is not active.

A first, simple, possible model to describe the behavior of the interferer, called "Model 1" is described as following: the interferer is active in a time slot with probability $p$ and not active with probability $(1 - p)$. With this model, if $p$ is known, then sensing is useless because the prediction of the interference is always equal to $p$.

A second possible model to describe the behavior of the interferer, called "Model 2", is a Markov chain where the states of the model represent the states of the channel. For instance, if there are two possible channels the states can be: $s_0 = (0)$, $s_1 = (1)$ meaning that the model assumes that an interferer is either in channel 0 or in channel 1. Such model may be proposed to characterize for instance the activity of a communication device using a Wi-Fi communication channel in the ISM public band for example.

In an example, this model may be used to predict a potential interference over a communication channel labelled as "channel 1", with state $s_0$, corresponding to the interferer being in channel 0, being used to indicate an absence of interference at least over channel 1, while state $s_1$, corresponding to the interferer being in channel 1, may be used to indicate a presence of interference over channel 1.

A third, more advanced, possible model, called "Model 3" is another Markov chain where the states of the model represent the states of the channel and further include the number of time slots spent in this channel. For instance, if there are two possible channels, the states can be: $s_0 = (0,1)$, $s_1 = (0,2)$, $s_2 = (0,3)$, $s_3 = (1,1)$, $s_4 = (1, 2)$, $s_5 = (1,3)$ meaning that the interferer is either in channel 0 since one time slot (state $s_0$), since two time slots (state $s_1$), or since three time slots or more (state $s_2$), or in channel 1 since one time slot (state $s_3$), since two time slots (state $s_4$), or since three time slots or more (state $s_5$).

Let us consider, for a communication channel, a series of transmission opportunities in the time domain. Each transmission opportunity may then be identified by a corresponding time noted $t$. $t = 0$ corresponds to an initial transmission opportunity, $t = 1$ corresponds to the next transmission opportunity and so on.

Let $X_1, X_2, X_3,..., X_t$ be random variables representing the state of a Markov chain at time $t$. The parameters of the Markov chain model then represent the transition probabilities to go from one state to another state such as $P(X_t = s_0 | X_{t-1} = s_1) = p_{10}$. For instance in the simple, two-state Model 2, four transition probabilities noted $p_{00}$, $p_{01}$, $p_{10}$ and $p_{11}$ may be defined as the probabilities of, respectively, remaining in channel 0, switching from channel 0 to channel 1, switching from channel 1 to channel 0 and remaining in channel 1.

As a result, the second and third possible models may be represented by a matrix $P$ where the coefficient $p_{ij}$ at the i-th row and j-th column represent the probability $P(X_t = s_j | X_{t-1} = s_i)$. According to this representation, the transition matrix $P$ for the second possible model is the following $P = \begin{bmatrix} p_{00} & p_{01} \\ p_{10} & p_{11} \end{bmatrix}$.

A vector $\underline{\pi}_t$ may be defined to represent the probabilities to be in the different states at time $t$ such that: $\underline{\pi}_t = [P(X_t = s_0)\ P(X_t = s_1) \cdots]$.

The vector $\underline{\pi}_{t+1}$ is obtained according to equation (E1) below.

Equation (E1) $\qquad \underline{\pi}_{t+1} = \underline{\pi}_t P$

Fig. 4 represents a result 402 of calculating an interference probability, using an implementation of "Model 2" for a series of 20 time slots at times $t = 1$ to $t = 20$, considering arbitrary time units, where sensing is performed only at $t = 0$ and indicates an absence of interference over a communication channel of interest.

Fig. 5 represents a result 502 of calculating an interference probability using a possible implementation of "Model 3" for a series of 25 time slots at times $t = 1$ to $t = 25$, considering arbitrary time units, where sensing is performed only at $t = 0$ and indicates an absence of interference over a communication channel of interest.

One can observe that, unlike with Model 1, the estimated interference probability in the case of using "Model 2" or "Model 3" is not constant over time due to the influence of the transition probabilities.

Let us consider a scenario where a sensing operation is performed at time $t$ and one of the states defined in the model is directly observed. A vector noted $\underline{\pi}_t$ may then be defined, at time $t$, as being composed of a 1 at the index of the observed state and of 0's at the index of all other states defined in the model. This simply means that the state is known with probability one, i.e., perfectly known.

If the state is not directly observable at time $t$, i.e., it is not deterministic, as in the case of a hidden Markov chain, an inference algorithm can be used to compute $p(X_t/o_1, ...,o_n)$, where $o_1, ...,o_n$ represent $n$ previous observations. Then, $p(X_t = s_i|o_1, ...,o_n)$ represents the $i^{th}$ component $P(X_t = s_i)$ of $\underline{\pi}_t$.

One realization of a Markov chain means that the random variables $X_1, X_2, X_3, ...,X_t$ are drawn according to the corresponding Markov chain model (for instance "Model 2" or "Model 3") and the values taken by each random variable are observed.

An example of one such realization 602 is illustrated by Fig. 6.

The use of a predictive model to calculate an interference probability is not necessary, since it is possible to compute model free statistics where the probabilities $p(X_t = s_i|o_1, ...,o_n)$ are estimated based on observations. Usually, such an approach requires to perform more observations and to store more parameters comparatively to an approach using a predictive model.

The parameters of the predictive model, e.g., $p$ for "Model 1" or $p_{ij}$'s for "Model 2" and "Model 3" may be predetermined. If not, they can be estimated.

A possible estimation process relies on counting event occurrences. For instance, by counting observed transitions from state $i$ to state $j$ across a number of channel observations and dividing by the number of channel observations, an estimate for $p_{ij}$ in "Model 2" or "Model 3" can be obtained.

By counting a number $k$ of observed interferences across a number n of channel observations, the interference probability may be estimated, or approximated, as $\widehat{p_1} = k/n$, according to a standard approach.

When estimating in real-time, the estimates of $p$ might not be exact. Hence, a reliability metric should accompany each estimated parameter to reflect its trustworthiness. This reliability is vital for fair interference predictions and should be factored into the prediction algorithm.

Details about how to obtain such reliability metric in the exemplary contexts of "Model 1", "Model 2" and "Model 3" are now provided.

There are different possible ways to implement the reliability mechanism.

For "Model 1", if the parameter $p$ is not predetermined, it can be derived from the observations obtained by conducting the sensing operation. By examining $n$ channel observations and noting $k$ active interference occurrences, the parameter $p$ may be treated as a random variable. Assuming independent observations, as the number of observations grows, the variance of this random variable decreases. The Gaussian approximation approach is appropriate when the parameter $p$ is not too close to 0 or 1 and if the number of observations $n$ is not too small.

For small values of n, it is more accurate to consider the channel observations as $n$ samples from a Bernoulli random variable $Y$ with hidden parameter $p$. The corresponding binomial random variable is $Z_n = \sum_{i=1}^{n} Y_i$, and the probability to observe the interference $k$ out of n times for a given value of $p$ is given by the Binomial distribution, noted $P(Z_n = k) = \binom{n}{k} p^k (1-p)^{n-k}$. The probability $P$ that the parameter $p$ is equal to a given value when the interference is observed $k$ out of n times is given by a Beta distribution, noted $f_{k,n}(p) = \binom{n}{k} p^k (1-p)^{n-k} / \int_q \binom{n}{k} q^k (1-q)^{n-k} dq = (n + 1) \binom{n}{k} p^k (1-p)^{n-k}$, as shown in Fig. 11 for two sets of values $\{n, k\}$ which are $\{n = 100, k = 3\}$ 1102 and $\{n = 33, k = 1\}$ 1104. The Beta distribution is of interest to characterize the reliability of the knowledge of the interference probability $p$. The mean of this distribution, noted $E[P]$, may be calculated by equation (E2) below. It is a property of the Beta distribution coming from the Binomial modelling.

Equation (E2) $\qquad E[\mathcal{P}] = \widehat{p_2} = (k + 1)/(n + 2)$

Using $\widehat{p_1} = k/n$ instead of $\widehat{p_2}$ yields an over-estimation of the expected performance when $n$ is small.

The distribution of $P$ enables to compute the reliability on the estimate of $p$. If a criterion to be met before starting a communication is to make sure, with a very high confidence (95%), that $p < \varepsilon$ with $\varepsilon$ being a threshold 1106 that is set to an arbitrary value, then it is possible to compute the minimum number of sensing observations to achieve the target confidence. With $\varepsilon = 0.1$, $n \geq 28$ if $k = 0$, $n \geq 48$ if $k = 1$ and $n \geq 62$ if $k = 2$.

Both "Model 2" and "Model 3" are described as a Markov chain. The Markov chain parameters are estimated by observing transitions between states of the Markov chain as follows, assuming that n observations of a transition from a given state $s_i$ are conducted. For the sake of simplicity, we further assume that there are only two possible states stemming from $s_i$ being states $s_{j1}$ and $s_{j2}$. The aim is to characterize $p_{ij1} = P(X_t = s_{j1}|X_{t-1} = s_i)$ and $p_{ij2} = 1 - p_{ij1} = P(X_t = s_{j2}|X_{t-1} = s_i)$.

Using the same logic as with "Model 1", observing these transitions can be approximated to sampling $n$ times a Bernoulli random variable $Y$. The parameters $p_{ij_1}$, $p_{ij_2}$ thus become random variables.

In another scenario, the parameters of the Markov chain model for a number of potential interferers could be perfectly known but there may be an uncertainty regarding which specific interferer is active. In this case, the probability $P$ ($p = \alpha$) corresponds to the probability that the interferer having the parameter $p = \alpha$ is active. Then, once the interferer is completely identified, there is no remaining uncertainty.

From the discussion above, it is apparent that by expressing the prediction as a probability distribution, it inherently provides a figure of merit pertaining to the reliability of the prediction. For instance, a mean value and a standard deviation value or a given quantile, among other possible values, may be derived from such probability distribution. In contrast, a standard interference prediction leaves its reliability unknown.

One possibility for determining the estimation $\hat{p}_{ij}$ of the interference probability in the cases of "Model 2" or "Model 3" is to equate it to the average of the corresponding distribution of $p_{ij}$, as: $\hat{p}_{ij} = E[p_{ij}] = \int_{pij} p_{ij} P(p_{ij}) \, dp_{ij} = \int_{pij} p_{ij} f_{k,n}(p_{ij}) \, dp_{ij}$, where the solution is given by equation (E2), namely $\hat{p}_{ij} = (k + 1)/(n + 2)$.

Similarly in the case of "Model 1", $p_{ij}$ is simply $p$ and the estimated interference probability is directly equal to the estimated model parameter $1 - \hat{p}$.

For "Model 2" and "Model 3", one still has to compute the estimated interference probability from the parameters of the predictive model in order to predict the interference in the future. Following the prior logic, the interference probability $\hat{p}_j^{t+1}$ at time t + 1 can be set to the mean of its distribution using the previously obtained estimated values

$$\hat{p}_{ij} : \hat{p}_j^{t+1} = E\left[p_j^{t+1}\right] = \sum_i E\left[p_i^t \, p_{ij}\right] = \sum_i E\left[p_i^t\right] \hat{p}_{ij}.$$

Alternatively, a second possibility for estimating $\hat{p}_{ij}$ is to apply an equation derived from equation (E1), where rather than computing individual probabilities $P(X_t = s_i)$ for each state $s_i$ by applying the standard form of equation (E1), one seeks to obtain the complete distribution of the random variable $P(X_t = s_i)$ for all states $s_i$. This allows access to all the information for the distribution and not just its mean.

Considering "Model 2", let us consider a scenario where $k_0$ transitions from $s_0$ to $s_0$ have been observed out of $n_0$ observations of state $s_0$ and $k_1$ transitions from $s_0$ to $s_1$ have been observed out of $n_1$ observations of state $s_1$. At the initial time $t = 0$, $\underline{\pi}_0 = [1\ 0]$, i.e., $p_0^0 = 1$ with no uncertainty and $p_1^0 = 0$ with no uncertainty. This initial condition reflects the observation of the interference in the state $s_0$. Applying equation (E1) under these circumstances enables to compute the probability of encountering interference in the next time slot. Equation (E1) is versatile in its application: it can be used in particular to calculate the mean interference probability for a succinct prediction or to establish the entire probability distribution for a more comprehensive insight into potential interference for the next time slot. While equation (E1) is the foundation for these calculations, its application varies based on the desired outcome. When the focus is solely on calculating probabilities without considering their reliability, equation (E1) is applied in its standard form. However, for deriving probability distributions as in the aforementioned example, the equation is used in a more symbolic manner rather than strictly.

As examples, for t = 1, we have $p_0^{(t=1)} = p_{00} \sim Beta(k_0 + 1, n_0 - k_0 + 1)$, and $p_1^{(t=1)} = p_{01} \sim Beta(n_0 - k_0 + 1, k_0 + 1)$, for $t = 2$, we have $p_0^{(t=2)} = p_{00}^2 + p_{01}p_{10}$, and so on.

The abovementioned distributions depend only on the parameters $k_0$, $n_0$, $k_1$, $n_1$ and the specific time t.

To estimate the distribution of $p_i^{(t+\Delta)}$, a numerical approach could involve e.g. sampling many times (typically 100.000 times) the random variable or iterate $\Delta$ times equation (E1) for each realization if the analytical expression of the random variable for $p_i^{(t+\Delta)}$ is not known. This provides accurate results but at the expense of a high complexity.

An alternative and less complex approach in terms of computational resources seeks closed-form formulas to directly obtain the distribution of $p_i^{(t+\Delta)}$. This approach is dramatically less resource consuming than the numerical approach. Interestingly, it has been observed that the distribution of $p_0^{(t=2)}$ or more generally $p_i^{(t+\Delta)}$ can be accurately estimated by a Beta distribution. Assuming this is accurate, an analytical expression of the distribution of $p_0^{(t=2)}$ as a function of $k_0$, $n_0$, $k_1$, $n_1$ can be derived. Employing a moment matching method, which uses moment equations to identify the resultant random variable parameters, may be advantageous. The moment matching methods with other distributions may also be considered.

The discussion above shows that the predictive model has parameters which are predetermined or which are estimated based on past sensing measurements and have a measure of reliability.

These parameters allow the predictive model to determine and provide a prediction of a potential interference for an upcoming instance when provided with a sensing measurement for a recent instance or with a sequence of sensing measurements for a plurality of recent instances.

The interference prediction may be provided for several upcoming time slots at once, as illustrated by Fig. 7 in the case where the predictive model is a trained neural network.

Specifically, at least one observed channel condition of a communication channel, obtained 702 as a sensing measurement for at least one transmission opportunity, is provided 704 as input to the trained neural network. A prediction of a potential interference on the communication channel for each of at least one upcoming transmission opportunity is then obtained 706 as output of the trained neural network.

Channel characteristics pertinent to the technique outlined in Fig. 2 are now discussed, specifically addressing the prediction of an activation probability of an interference on the communication channel.

The discussion centers on the signal to noise and interference ratio (SNR), which is a key factor in determining an effective communication strategy under varying interference conditions. The signal to noise and interference ratio (SNR) is defined as the ratio between the signal power and the combined power of noise and interference. Within this context:

- $SNR_1$ denotes the SNR when the interferer is active; and
- $SNR_2$ denotes the SNR when the interferer is not active.

Typically, $SNR_1 \ll SNR_2$. E.g., $SNR1 = SNR_2 - 10$ dB.

An Additive White Gaussian Noise (AWGN) model is often utilized as a standard approach to represent the communication channel. Thanks to Shannon theory, the maximum achievable rate on an AWGN channel at a given SNR irrespective of the coding scheme is $C(SNR) = 0.5 \, log \, (1 + SNR)$. As an example, with a 10 dB SNR gap, the difference $C(SNR_2) - C(SNR_1)$ is approximately 1.5 bits per channel use (bpcu), and around 3 bpcu for a 20 dB SNR gap.

In this model, a specific $SNR_i$ necessitates the use of a corresponding modulation and coding scheme (MCS), referred to as $MCS_i$, to encode data at a rate of $C(SNR_i) - \varepsilon$, where $R(MCS_i, SNR_i) = C(SNR_i) - \varepsilon$. The value of $\varepsilon$, which represents a deviation from the theoretical capacity, is influenced by factors such as the code's length and efficiency. The notation $R(MCS,SNR)$ $(<C(SNR))$ refers to an MCS achieving a rate that ensures an error probability below a target level (e.g., $FER=10^{\wedge}(-3)$). The tried rate of an MCS, denoted as $R(MCS)$ might be higher than the achieved rate $R(MCS_i, SNR_i)$ due to practical limitations, e.g., if the code has a coding rate ½ and a 16-QAM is used, then $R(MCS) = 0.5 * 4 = 2$. The precise value of $\varepsilon$ is typically determined through Monte Carlo simulations.

At a given $SNR_i$, the quantity $C(SNR_i)$ represents a theoretical boundary that practical implementations aim to approach by selecting an MCS, $MCS_i$. The resultant data rate $R(MCS_i, SNR_i)$ is influenced by the properties of the code, including its length and efficiency.

$Pe(SNR_i, MCS_j)$ denotes the error probability achieved with a given $SNR_i$ and $MCS_j$. Assuming the use of an efficient code, $Pe(SNR_i, MCS_j)$ is approximately zero if $R(MCS_j) > C(SNR_i)$ and one otherwise.

The choice of MCS typically involves selecting both the code rate (if adaptable) and the modulation type (e.g., 4-QAM or 16-QAM). It is important to note that the presence of multiple interferers or varying transmitting powers can result in multiple SNR values to consider. Additionally, channel randomness, such as Rayleigh fading, may also need to be accounted for in this analysis.

In the context of the technique outlined in Fig. 2, the concepts of "coherence characteristic" and "activation probability" are now discussed in more detail.

The notion of "statistically independent realizations" is critical in understanding the behavior of the interferer. When $P(X_t = s_1 | X_{t-\Delta}) = P(X_t = s_1)$, the channel realizations at times $t$ and $t - \Delta$ are considered to be mutually independent. In this context, $\Delta_c$ is defined as the smallest gap for achieving quasi-independence. The term "quasi" here is related to the parameter $\varepsilon$,. This definition allows the quant $\Delta_c$ to be interpreted as the interferer coherence time.

The quantity $\Omega$ calculated as $N/\Delta_c$ where $N$ is the codeword size, represents the number of independent channel realizations experienced by the codeword.

Stationarity is generally assumed, meaning that $P(X_t = s_1) = P(X_{t-\Delta} = s_1) = p_{fix}$.

For instance, when "Model 2" is used and the matrix parameters are not perfectly known, $p_{00}$ and $p_{11}$ become random variables. Consequently, both $\Omega$ and $\Delta_c$, being functions of $p_{00}$ and $p_{11}$, also assume the nature of random variables in this context.

In relation to the technique detailed in Fig. 2, the computation of interference coherence time is now detailed in an example where the 2-states Markov model defined as "Model 2" is used to represent transition between channel states.

The channel coherence time $\Delta_c$ marking the point where $X_{t+\Delta_c}$, and $X_t$ are independent and identically distributed is estimated such that $p(X_{t+\Delta_c}|X_t) = p(x_{t+\Delta_c})$.

The Markov matrix representing Model 2 is recalled as $P = \begin{bmatrix} X & 1-X \\ 1-Y & Y \end{bmatrix} = \begin{bmatrix} p_{00} & p_{01} \\ p_{10} & p_{11} \end{bmatrix}$ , where we thus have $X = p_{00}$ and $Y = p_{11}$..

In scenarios with perfect knowledge of the matrix parameters, the second eigenvalue of P is calculated as $\lambda_2 = X + Y - 1$. The significance of $\lambda_2$ is in its influence on state transition probabilities, which diminish exponentially at the rate of $(\lambda_2)^\Delta$. When $(\lambda_2)^\Delta$ approaches zero (with $\Delta$ as the variable), a fixed point is reached where the initial state's value becomes indeterminable. Consequently, for practical purposes, it is aimed for $(\lambda_2)^{\Delta_c} < \varepsilon$, leading to the equation $\Delta_c = \frac{\log \epsilon}{\log(|\lambda_2|)}$ for computing the channel coherence time.

Furthermore, $p_{fix}$, representing the steady-state probability, is calculated as the first coefficient of the first eigenvector of P. This yields $p_{fix} = \frac{1-X}{1-X+1-Y}$, solidifying the link between the Markov model parameters and the long-term behavior of the channel.

In cases where the knowledge of matrix parameters is not perfect, additional considerations come into play. Specifically, it becomes possible to derive a closed-form formula for the probability density function $g_{\Omega,p_{fix}}(.,.)$, representing the joint distribution of $\Omega$ (the number of independent channel realizations) and $p_{fix}$. This formulation is particularly valuable in scenarios where exact values of matrix parameters are uncertain or subject to variation, and more particularly for the purpose of link adaptation.

In the development of dynamic link adaptation strategies for communication systems, the concepts of feedback and retransmission generally have an important role.

Feedback refers to the mechanism where the receiver communicates back to the transmitter about the success or failure of data transmission. This information can be crucial for adjusting future transmission strategies.

Retransmission involves sending the data again if the initial transmission is unsuccessful, enhancing the reliability of the communication process.

Despite their importance, there are scenarios where feedback and retransmission may not be feasible or desirable due to various constraints such as latency, bandwidth limitations, or specific application requirements. In such cases, link adaptation must be executed without these aids, relying solely on the prediction models and initial transmission strategies.

Another aspect to take into account is that the prediction models presented in the present document vary in their approach to reliability. Some models are designed to output predictions that are associated with a measure of reliability also requested by the model. This reliability information provides an additional layer of confidence regarding the predicted state of the channel, enhancing decision-making in link adaptation. Conversely, other models output predictions without an associated reliability information, necessitating different strategies in link adaptation due to the absence of this additional confidence level.

We will now first delve into scenarios where neither feedback nor retransmission is available. This discussion will be bifurcated into two parts: one focusing on cases where the prediction of the activation probability of interference on the communication channel does not include a notion of reliability, and another where reliability is a key component of the prediction model.

We now explore link adaptation strategies in scenarios without the possibility of feedback or retransmission, in cases where the prediction of the activation probability of an interference on the communication channel is not associated with a measure of reliability.

In this segment of the discussion on link adaptation strategies, the primary focus shifts to evaluating the practical achievable rate in communication systems. This segment of the discussion further mentions the number of independent channel realizations, which is deduced from the size of the codeword denoted N, and the interference coherence time denoted as $\Delta_c$.

To provide a comprehensive understanding of how these factors interact and influence the achievable rate, two distinct and exemplary scenarios are examined.

The first scenario involves a situation characterized by a single channel realization. This occurs when the interferer coherence time substantially exceeds the size of the codeword. In this case, the entire codeword is subjected to stable channel conditions corresponding to a fixed interferer power throughout its transmission.

The second scenario involves a situation characterized by multiple independent channel realizations. This occurs when the interferer coherence time is shorter than the codeword size, resulting in the codeword experiencing different interference states during its transmission. Due to this variability, the transmission must adapt to varying conditions across different segments of the codeword.

In a scenario characterized by a single independent channel realization, the SNR is $SNR_1$ with proba p , and $SNR_2$ with proba $(1 - p)$ for the entire codeword.

Utilizing the "Model 2" approach for transition probability representation, the fixed probability p is $p_{fix}$ when no sensing is performed. Alternatively, if sensing was performed at time t, the prediction is refined through the equation $\underline{\pi}_{t+\Delta} = \underline{\pi}_t P^\Delta$.

The error probability for a selected $MCS$ is determined by the formula $Pe = p \times Pe(SNR_1, MCS) + (1 - p) \times Pe(SNR_2, MCS)$.

Given that the chosen MCS is selected to ensure $R(MCS) \leq C(SNR_2)$, it is reasonable to assume that $Pe(SNR_2, MCS)$ is approximately zero (and thus $R(SNR_2, MCS) \approx R(MCS)$). This assumption is based on the strategy of selecting an MCS such that its achievable data rate $R(MCS)$ is as close as possible to the theoretical upper bound $C(SNR_2)$, yet not exceeding it, to minimize the risk of high error rates that could compromise the data rate significantly.

Hence, the above equation becomes $Pe = p \times Pe(SNR_1, MCS)$.

In this context, Fig. 8 and Fig. 9 provide a visual comparison of data rate and error rate performance for two modulation and coding schemes across different SNR values. In Fig. 8, curve 802 represents the data rate achieved with $MCS_1$ as a function of SNR, while curve 804 illustrates the data rate for $MCS_2$. Similarly, in Fig. 9, curves 902 and 904 depict the error rates for $MCS_1$ and $MCS_2$, respectively, as a function of SNR.

When p is small, indicating a low probability of interference, the SNR will more likely be $SNR_2$. In such instances, $MCS_2$ can be chosen to achieve an $R(MCS)$ near $C(SNR_2)$, which results in $Pe(SNR_1, MCS_2)$ being approximately 1 and the overall error probability $Pe$ equating to p (using the above formula $Pe = p \times Pe(SNR_1, MCS)$). This scenario represents a condition where the system can optimize for higher data rates due to the lower likelihood of interference.

Conversely, if p is notably higher than a target error probability denoted $P_e^{target}$, the condition is likely to align with $SNR_1$. Under these circumstances, $MCS_1$ can be selected to obtain an $R(MCS)$ closer to $C(SNR_1)$. This choice ensures that $Pe(SNR_1, MCS_1)$ is approximately zero and that the overall error probability $Pe$ closely approximates the target error probability.

The specific values of $Pe(SNR_1, MCS)$ for a chosen $MCS$ and $SNR_1$ and specific channel coding scheme, are generally derived from a lookup table, similar to the data presented in Fig. 9. This table is constructed offline through Monte Carlo simulations, providing a repository of error probabilities corresponding to various SNR and MCS combinations.

Continuing the discussion on link adaptation strategies where feedback and retransmission are not utilized and model predictions are not associated to measures of reliability, the concept of outage is now discussed in relation to a possible communication objective where the maximization of the expected rate is sought even when some data packets may be lost.

An outage occurs when the data transmission rate falls below a certain threshold. The objective is to maintain a minimum rate with a specific probability $p(R > Threshold)$. Hence, the quantity $C = 1 - p(R > Threshold) = p(R < Threshold)$ refers to as the outage probability.

For example, if the interferer is active (equating to an SNR state of $SNR_1$) and the MCS is optimized for $SNR_2$, then the rate effectively drops to zero. This condition gives us a straightforward relationship where $p(R < Threshold) = p$ equals the overall error probability $Pe$ when the MCS is tailored for the non-interfering state ($SNR_2$).

Conversely, if the MCS is adapted to the interfering state ($SNR_1$) and the threshold is set to $R(MCS,SNR_1)$, the outage probability $p(R < Threshold)$ drops to zero.

Therefore, to meet a requirement where $p(R < Threshold)$ is less than a very small quantity $\varepsilon$, the modulation and coding scheme should be chosen to match closely with $C(SNR_1)$. This choice provides a safety margin to ensure communication is maintained even in the worst-case interference scenario. If $\varepsilon$ is larger and the probability of interference p is not excessively high, then the rate of the MCS and the threshold may be set near $C(SNR_2)$, allowing for higher data rates under less stringent reliability requirements.

Hence, we see that in this case, the notion of outage is closely related to the error probability described above, and that, in particular, the outage probability is equal to the error probability.

More generally, the outage probability C may be computed according to the following equation: $C = \sum_r 1_{r<Th} p(R = r) = \sum_r 1_{r<Th} \sum_i p(R = r|s = i)p(s = i) = \sum_s p(s: R(s) < Threshold)$.

Focusing on the expected rate considered while affording a high probability of packet loss, then we have the following. Let's assume the probability that the interference is active is $p=0.2$. If the chosen MCS yields a data rate approximately equal to e.g., $C(SNR_2) = 3$ bpcu when there is no interference, an achievable rate of approximately 3 bits per channel use (bpcu) can be expected. However, if interference is present, resulting in an SNR state of $SNR_1$, the rate would

be zero. This gives us an expected rate $E[R]$ of 0.83 + 0.20 = 2.4 bpcu.

On the contrary, if the MCS is selected so that the data rate approximates e.g., $C(SNR_1) = 1$ bpcu, providing a rate of 1 bpcu regardless of the interference state, then the expected rate $E[R]$ remains consistently at 1 bpcu. The strategic choice between these two MCS options hinges on which achieves the higher rate under the given conditions. In the first example, the MCS optimized for $SNR_2$ is preferable for maximizing the expected rate due to the lower probability of interference.

In the subsequent discussion, we will proceed with analyzing scenarios involving multiple channel realizations and how the variability in interference states within a single codeword transmission necessitates a more complex link adaptation strategy.

When considering a scenario with multiple channel realizations, where the interference coherence time is less than the codeword size, the codeword is likely to encounter a mix of SNR states throughout its transmission. If $\Omega$, the number of independent channel realizations, is high, the codeword will experience $SNR_1$ approximately p×N times and $SNR_2$ the remaining (1-p)×N times.

The ergodic capacity, denoted as $\hat{C}$, serves as an upper limit on the achievable rate and is calculated as $\hat{C} = p \times C(SNR_1) + (1 - p) \times C(SNR_2) > C(SNR_1) = C(SNR_1) + (1 - p)\Delta R$.

While this capacity may not be practically attainable, it informs the selection of an MCS with $R(MCS)$ that can achieve a rate greater than $C(SNR_1)$ while maintaining an error probability close to zero. This is due to the frequent occurrence of $SNR_2$ during transmission, which aids decoding.

Again, the value of $R(MCS)$ such that the error probability is small enough must be found via offline Monte Carlo simulations and depends on the codeword used and the values of $SNR_1$, $SNR_2$, and p.

In the context of scenarios with a moderate number of independent channel realizations ($\Omega$), the link adaptation strategy must strike a balance. This situation where $\Omega$ does not reach extreme results in a codeword experiencing a mix of SNR states where the proportions are not consistently close to a given number of high-interference state ($SNR_1$) and a given number of low-interference state ($SNR_2$). In particular, the fact that the codeword can sometimes experience a higher number of high-interference state impacts negatively the rate. In such cases, the selection of an MCS is optimized to yield an error probability that remains low, situating the achievable rate somewhere between the rates that would be optimal for the two extreme SNR conditions. The appropriate rate for this balanced MCS, ensuring minimal error probability, is determined through a process of offline Monte Carlo simulations, which consider the specific characteristics of the codeword and the range of SNR values along with the probability of interference.

Fig. 10 graphically represents the relationship between the achievable rate and the number $\Omega$ of independent channel realizations. In this figure, curve 1002, which is here represented as a linear relation but may potentially be non-linear, depicts the achievable rate as a function of $\Omega$ under the assumption of coding. The precise shape of curve 1002 is to be established through simulations, as it encapsulates the complex interplay between rate, error probability, and the number of channel realizations. The ergodic capacity, indicated by the dashed line 1004, marks the theoretical upper boundary for the rate. Areas above curve 1002 indicate an error probability exceeding the target, signaling an outage scenario.

Transitioning from the exploration of link adaptation strategies without feedback or retransmission and the absence of reliability, attention is now turned to scenarios that incorporate reliability into the decision-making process in the absence of feedback mechanisms.

We now consider the case of a single channel realization to explain how the concept of reliability shapes possible strategies related to outage and the expected rate.

When reliability metrics are available, the approach to manage the outage probability, in other words, ensuring a minimum rate is achieved with a specified probability, becomes more nuanced because the outage probability transforms into a random variable.

When incorporating model reliability into the link adaptation strategy, the outage probability denoted above by $p(R < Threshold)$, transforms into a random variable whose distribution can be analyzed. For instance, the probability $p(p(R < Threshold) < \varepsilon)$ can be assessed or the expected outage probability $E[p(R < Threshold)]$ can be calculated. Using the MCS adapted to $SNR_2$ and considering a random variable with the distribution $f_{k_0,n_0}(x)$ of the example previously described, $p(p(R < Threshold) < \varepsilon)$ can be computed using the incomplete Beta function $\int_{x=0}^{\epsilon} f_{k_0,n_0}(x)$.

Let us consider for instance an error margin $\varepsilon$ set at 0.1 and a confidence level $\beta = 0.95$. When no interferences have been previously observed (k = 0), the probability $p(p(R < Threshold) < \varepsilon)$ exceeds $\beta$ only when the number of observations, n, is 28 or more. This threshold on the number of observations n increases as k increases. With one observed interference (k = 1), n must be at least 48, and for k = 2, it rises to 62.

Fig. 11 illustrates this relationship, plotting the distribution of p against two pairs (1102, 1104) of {n,k} values having the same ratio k/n in the case where the MCS for $SNR_2$, noted $MCS_2$, is chosen. This visual representation underscores how the number of past observations (k) and the total number of observations (n) interact to shape the distribution curves. We see that for the same ratio k/n, we have different outage probability values.

This value is to be compared with the case where the MCS for $SNR_1$, say $MCS_1$, is chosen. When $p(p(R < Threshold) < \varepsilon)$ becomes small enough (as a function of the number of observations) or $E[p(R < Threshold)]$, then, one may switch from $MCS_1$ to $MCS_2$.

As the model reliability data influences the link adaptation strategy, the decision to select $MCS_1$, which is tuned to $SNR_1$, may shift towards $MCS_2$, optimized for $SNR_2$, as the probability $p(p(R < Threshold) < \varepsilon)$ decreases or as the expected outage probability $E[p(R < Threshold)]$ becomes sufficiently small.

Two examples illustrating situations where the threshold is positioned in relation to $R(MCS\_1, SNR\_1)$ are now provided.

In a first example, let us consider that the threshold is set at a level lower than $R(MCS_1, SNR_1)$. This means that even with a low $SNR_1$, the transmission rate R achieved with $MCS_1$ exceeds the threshold. Consequently, there is a high probability of successful transmission under $MCS_1$. Referring to our probabilistic criterion where $p(p(R < Threshold) < \varepsilon)$ must be lower to switch to $MCS_2$, it becomes clear that, in this scenario, switching from $MCS_1$ to $MCS_2$ is not justified because the probability of not meeting the threshold with $MCS_1$ is already very low.

In a second example, let us consider that the threshold is set at a level higher than $R(MCS_1, SNR_1)$. This implies that under $MCS_1$, even with optimal $SNR_1$, the transmission rate R does not satisfy the threshold. In this context, transmission under $MCS_1$ would frequently result in failures. Therefore, transitioning to $MCS_2$ becomes relevant. However, this transmission should only occur when sufficient confidence is established, i.e., when the probability $p(p(R < Threshold) < \varepsilon)$ becomes small enough. This condition is met only after an increased number of observations under varied conditions, thus ensuring that the switch to $MCS_2$ is statistically justified to maintain or improve the reliability of transmission

The link adaptation strategy in single channel realization scenarios with the inclusion of reliability metrics is now further discussed by specifically examining the expected rate and its calculation under various conditions.

The selection of a MCS tailored for $SNR_1$ results in an expected rate $E[R]$ which can be considered the minimum achievable rate $E[R] = R(MCS, SNR_1) = R_{min}$.

Conversely, employing an MCS which rate $R(MCS)$ closely aligns with $C(SNR_2)$ under nointerference conditions affords a different expected rate calculation detailed as following.

If the random variable $p_i^{(t)}$ follows a continuous probability density function $f\left(p_i^{(t)}\right)$, then $E[R] = $

$$\int f\left(p_i^{(t)}\right) E_{p_i^{(t)}} [R] \, \mathrm{d}p_i^{(t)}.$$

For instance, if the state random variable is $p_{s_0}^{t=1}$ with distribution $f_{k_0,n_0}(p)$ (as already described), this yields

$$E[R] = \int_{p=0}^{1} f_{k_0,n_0}(p) E_p[R] dp = \int_{p=0}^{1} f_{k_0,n_0}(p)(1-p) R_{max}$$

$$E[R] = R_{max}\left(1 - \int_{p=0}^{1} p\, f_{k,n}(p) dp\right) = R_{max}\left(1 - E\left[P_{s_0}^{t=1}\right]\right),$$

$$E[R] = R_{max}\left(1 - \frac{k_0+1}{n_0+2}\right).$$

In the above calculations, the mean value of $E\left[P_{s_0}^{t=1}\right]$ has been used as $E\left[P_{s_0}^{t=1}\right] = \frac{k_0+1}{n_0+2}$

While this average converges towards k/n when n is large, it is different when n is small. This is due to the positive skewness of the Beta distribution (when $k < n$ or negative skewness when $k > $ n). Considering the estimate $k/n$ instead of $(k + 1)/(n + 2)$ leads to an over estimation of the rate. The expected relative over estimation is:

$$E\left[\frac{1-k/n}{1-(k+1)/(n+2)}\right] = \frac{1-p}{1-(pn+1)/(n+2)}.$$

For a hidden parameter value $p = 0.1$, this over estimation is around 10% when $n = 7.3\%$ when $n = 30$, and 1% when $n = 80$.

In scenarios with limited observations, this over estimation may be detrimental to the determination of the most advantageous MCS and therefore recommended to consider the estimate $(k + 1)/(n + 2)$ instead of the approximated estimate $k/n$.

For calculating the expected rate at a future time t+Δ given an observation has been obtained at time t, as already mentioned, it is possible to compute the distribution of the interference probability at t+Δ by iterating Δ times equation (E1) in the case where reliability is not considered or by iterating a modified application of equation (E1) otherwise and to use the result of this computation as basis to influence the subsequent choice of MCS.

In the context of several channel realizations, where the exact number of independent channel realizations, $\Omega$, is known, but not the interference probability, $p$, the rate function needs to be adjusted to reflect the rate as a function of p for a fixed value of $\Omega$. The MCS is then chosen based on the interference probability, $\varepsilon$, such that the probability $P(p > \varepsilon)$ is calculated as $P(p > \varepsilon) = 1 - \int_0^\epsilon f_{\{k,n\}}(x)\,dx = 1 - \delta$. If $\delta$ is set at 0.95, this corresponds to a 5% likelihood of experiencing an error probability exceeding the target.

With "Model 2", where p is also treated as a random variable equal to $p_{fix}$ when no sensing occurs, the MCS can be selected based on a combination of the number of channel realizations, $\varepsilon_1$, and the interference probability, $\varepsilon_2$ such that the joint cumulative probability $P(\Omega < \varepsilon_1, p_{fix} > \varepsilon_2)$, calculated as $P(\Omega < \epsilon_1, p_{fix} > \epsilon_2) = \int_{x=0}^{\epsilon_1}\int_{y=\epsilon_2}^{1} g_{\Omega, p_{fix}}(x,y)dx\,dy$, is smaller than 1 - $\delta$, ensuring that the cumulative probability is 1 - $\delta$, with $\delta$ typically set at 0.95, and where $g_{\Omega, p_{fix}}(.,.)$ is the joint probability density function introduced previously.

When feedback and/or retransmission capabilities are introduced, such as in Automatic Repeat reQuest (ARQ) or Hybrid Automatic Repeat request (HARQ) schemes, the link adaptation strategy can be further refined. In these scenarios, the receiver communicates back to the transmitter regarding the success of the data transmission, enabling potential retransmission if necessary. The initial coding rate is then chosen not only based on the current interference prediction for the upcoming slot at t+1 but also considering potential future slots at t+$\Delta$, when retransmission might occur.

For instance, if the interference prediction at time $t + \Delta$ indicates a very low interference probability with a high reliability, some "risks" with the coding rate may be taken at time $t + 1$ as one is likely to have a second opportunity at time $t + \Delta$. If there is no other opportunity at time $t + \Delta$ (high interference probability), then one should choose a high enough coding rate such that the packet is successfully transmitted at time $t + 1$.

It is now referred to Fig. 12 which illustrates performance results obtained with a multi-level coding scheme using polar codes to code each level, as used e.g., in V. Corlay and N. Gresset, "A Simple Sign-Bit Probabilistic Shaping Scheme," IEEE communications letters, vol. 26, no. 4, pp. 763 - 767, Apr. 2022. This multi-level coding scheme with polar codes should be understood as the considered (adaptable) MCS. Each point of the curve 1202 shows the rate of the coding scheme such that the frame error rate is $10^{-2}$.

This coding scheme is very suited to this link-adaptation challenge: The MCS and thus coding rate can be very easily adjusted to match the requirements of a configuration.

To begin with, for a given (AWGN channel) SNR, the coding rate is obtained as follows: The capacity is computed via Shannon formula as $C(SNR) = 1/2\ log_2(1 + SNR)$. However, there is a loss due to the non-optimality of the code (due e.g., to the finite length) and to the potential absence of shaping. Hence, a back-off is often considered such that the code is designed for a rate $C(SNR - Backoff)$, which enables to have a low error probability at the target SNR.

As a result, the highest possible achievable rate for the considered interference channel is (obtained with the ergodic capacity formula): $R_{opt} = p \times C(SNR_2 - \Delta SNR_{interf} - Backoff) + (1 - p) \times C(SNR_2 - Backoff)$ where $\Delta SNR_{interf} = SNR_2 - SNR_1$. Then, we can invert Shannon formula to find the corresponding AWGN channel $SNR_{opt} = C^{-1}(R_{opt})$. Finally, via Monte Carlo simulations and for a given value of $\Omega$, we find the value $\Delta(\Omega)$ such that the coding scheme has a rate $C(SNR_{opt} - \Delta(\Omega))$ and a frame error probability of $10^{-2}$. The following parameter values are chosen for the simulations of Figure 12: p = 0.1, $SNR_2$ = 13.3 dB, $\Delta SNR_{interf}$ = 4 dB. The code length is n = 256 and the value of the back-off is 1.3 (coding loss) + 0.6 (shaping loss) dB.

**Claims**

1. A method for implementing a dynamic link for transmitting data over a communication channel, the method comprising:

   - obtaining a prediction of an interference on the communication channel, where the prediction is associated with a communication resource of the communication channel, the communication resource being a time resource, a frequency resource or a space resource;
   - obtaining a coherence characteristic of the interference on the communication channel; and
   - determining a communication parameter for use in the dynamic link for the communication resource, the determination being based on the prediction of the interference and/or on the coherence characteristic.

2. The method of claim 1, wherein the coherence characteristic is computed based on estimated parameters of an interference prediction model.

3. The method of claim 1 or 2, wherein the prediction of the interference comprises a prediction of an activation probability of the interference.

4. The method of claim 3, wherein the prediction of the interference and the coherence characteristic are deterministic.

5. The method of claim 3, wherein the prediction of the interference and the coherence characteristic are probabilistic, the prediction of the interference includes a reliability information that quantifies a certainty of the prediction of the interference and the coherence characteristic includes a distinct reliability information that quantifies a certainty of the coherence characteristic.

6. The method of any one of claims 1 to 5, wherein the at least one communication parameter is representative of a modulation and coding scheme.

7. The method of claim 6, wherein determining the at least one communication parameter is further based on a number of independent communication channel realizations determined as a function of the coherence characteristic.

8. The method of claim 7, further depending on claim 3, wherein, at least when the interferer power is fixed, the modulation and coding scheme that is selected for the case when the number of independent communication channel realizations equals 1 is selected with a lower coding rate than the modulation and coding scheme that is selected for the case when the number of independent communication channel realizations is greater than 1.

9. The method of any one of claims 1 to 8, wherein the at least one communication parameter is representative of a codeword segmentation scheme.

10. The method of any one of claims 1 to 9, wherein the at least one communication parameter is representative of a coding rate.

11. A non-transitory computer-readable recording medium on which a program is recorded for implementing the method according to one of claims 1 to 10 when the program is executed by a processor.

12. A system configured to implement a dynamic link for transmitting data over a communication channel, the system being configured to:

   - obtain a prediction of an interference on the communication channel, where the prediction is associated with a communication resource of the communication channel, the communication resource being a time resource, a frequency resource or a space resource;
   - obtain a coherence characteristic of the interference on the communication channel; and
   - determine a communication parameter for use in the dynamic link for the communication resource, the determination being based on the prediction of the interference and/or on the coherence characteristic.

CHANNEL CONDITION SENSING MODULE — 108

PREDICTIVE MODEL — 110

100 —

INTERFERENCE PREDICTION OBTAINING MODULE

COHERENCE CHARACTERISTIC ESTIMATE OBTAINING MODULE — 102

— 104

MCS DETERMINING MODULE — 106

120 — ENCODER + MAPPING MODULE

DECODER + DEMAPPING MODULE — 130

**FIG. 1**

FIG. 2

302 304

NO INTERF

INTERF

NO INTERF

INTERF

INTERF

INTERF

Time

**FIG. 3**

402

**FIG. 4**

FIG. 5

FIG. 6

702 → Obtain, for at least one transmission opportunity, a corresponding observed channel condition

704 → Provide the observed channel condition(s) to a neural network

706 → Obtain a prediction of a potential interference on the communication channel for at least one upcoming transmission opportunity

**FIG. 7**

Data rate

$C(SNR_2)$

With probability $1 - p$

$R(MCS_2, SNR_2)$

804

With probability $p$

$C(SNR_1)$

$R(MCS_1, SNR_1)$

$R(MCS_1, SNR_2)$

802

$R(MCS_2, SNR_1)$

$SNR$

$SNR_1$

$SNR_2$

**FIG. 8**

$Pe(SNR, MCS)$

With probability $p$

$P_e(MCS_2, SNR_1)$

904

With probability $1 - p$

$P_e(MCS_1, SNR_1)$

$P_e(MCS_2, SNR_2)$

902

$SNR_1$

$SNR_2$

$SNR$

## FIG. 9

Rate (bpcu)

$R(SNR2, MCS\ 2)$

1004

Ergodic capacity

· The shape of the curve is
· found by simulations and
  may be non linear

1002

$(1 - p)\Delta R$

Area above curve yields error
probability greater than target
(no stabilization) = Outage

$R(SNR1, MCS1)$

1

∞

$\Omega = \frac{N}{\Delta_c}$: Number of mutually
independent channel realizations

## FIG. 10

FIG. 11

$\Omega$: Nb of indep. interf. realizations (interf. proba $p$=0.1)

FIG. 12

**EP 4 618 455 A1**

| | Europäisches Patentamt |
| | European Patent Office |
| | Office européen des brevets |

# EUROPEAN SEARCH REPORT

**Application Number**

EP 24 30 5382

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARZBAN MOHAMED F ET AL: "Deep Learning for Probabilistic Interference Predictions in mmWave Networks", 2023 IEEE INTERNATIONAL CONFERENCE ON COMMUNICATIONS WORKSHOPS (ICC WORKSHOPS), IEEE, 28 May 2023 (2023-05-28), pages 42-47, XP034452713, DOI: 10.1109/ICCWORKSHOPS57953.2023.10283727 [retrieved on 2023-10-23] * abstract * * From beginning of section II "System model" to end of section IV "Interference Prediction Algorithms"; page 43 - page 46 * | 1-12 | INV. H04L1/00 H04B17/373 |
| X | SALEHI FATEME ET AL: "Reliable Interference Prediction and Management with Time-Correlated Traffic for URLLC", GLOBECOM 2023 - 2023 IEEE GLOBAL COMMUNICATIONS CONFERENCE, IEEE, 4 December 2023 (2023-12-04), pages 6699-6704, XP034555483, DOI: 10.1109/GLOBECOM54140.2023.10437025 [retrieved on 2024-02-26] * abstract * * from beginning of section I "Introduction" to end of section III.B "Resource allocation"; page 6699 - page 6702 * | 1-12 | |
| X | US 2023/292351 A1 (MARZBAN MOHAMED FOUAD AHMED [US] ET AL) 14 September 2023 (2023-09-14) * paragraph [0088] - paragraph [0135] * * claims 1-16 * | 1-12 | TECHNICAL FIELDS SEARCHED (IPC) H04L H04B |

The present search report has been drawn up for all claims

| Place of search | Date of completion of the search | Examiner |
|---|---|---|
| Munich | 27 June 2024 | Courville, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

24

## ANNEX TO THE EUROPEAN SEARCH REPORT
## ON EUROPEAN PATENT APPLICATION NO.

EP 24 30 5382

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2024

| Patent document cited in search report | Publication date | Patent family member(s) | Publication date |
|---|---|---|---|
| US 2023292351 A1 | 14-09-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V. CORLAY** ; **N. GRESSET**. A Simple Sign-Bit Probabilistic Shaping Scheme. *IEEE communications letters*, April 2022, vol. 26 (4), 763-767